(19) Europäisches Patentamt / European Patent Office / Office européen des brevets

(11) **EP 4 491 374 A1**

(12) **EUROPÄISCHE PATENTANMELDUNG**

(43) Veröffentlichungstag:
**15.01.2025 Patentblatt 2025/03**

(21) Anmeldenummer: **24187299.3**

(22) Anmeldetag: **09.07.2024**

(51) Internationale Patentklassifikation (IPC):
**B29C 55/20** (2006.01)     **B29C 55/02** (2006.01)

(52) Gemeinsame Patentklassifikation (CPC):
**B29C 55/20;** B29C 55/02

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **14.07.2023 DE 102023118684**

(71) Anmelder: **Brückner Maschinenbau GmbH
83313 Siegsdorf (DE)**

(72) Erfinder: **HÄUSL, Tobias
83278 Traunstein (DE)**

(74) Vertreter: **Flach Bauer & Partner
Patentanwälte mbB
Adlzreiterstraße 11
83022 Rosenheim (DE)**

(54) **ÖFFNEREINRICHTUNG**

(57)     Die vorliegende Erfindung betrifft eine Öffnereinrichtung für das Öffnen von Kluppen, insbesondere von Kluppen einer Reckanlage. Die Öffnereinrichtung umfasst zumindest ein Führungselement und zumindest ein Öffnerelement, wobei das Öffnerelement auf einer Umlaufbahn beweglich angeordnet ist. Das Führungselement führt das Öffnerelement auf zumindest einem Teil der Umlaufbahn. Die Umlaufbahn umfasst einen Öffnerabschnitt, der sich von einem Kontaktpunkt zu einem Abhebepunkt erstreckt. Das Öffnerelement ist dazu eingerichtet die zu öffnende Kluppe im Öffnerabschnitt zu öffnen.

**Fig. 5A**

EP 4 491 374 A1

**Beschreibung**

**Gebiet der Erfindung**

Die vorliegende Erfindung betrifft eine Öffnereinrichtung für das Öffnen von Kluppen, insbesondere von Kluppen einer Reckanlage sowie eine Reckanlage, die eine solche Öffnereinrichtung umfasst.

**Hintergrund**

Reckanlagen finden insbesondere bei der Herstellung von Kunststofffolien bzw. gereckten Textilien Anwendung. Üblicherweise wird in solchen Anlagen die zu reckende Materialbahn, in der Regel eine Kunststofffolie, mittels Kluppeneinheiten bzw. Kluppen erfasst und durch die Anlage bewegt. Die Kluppen sind auf umlaufenden Führungsschienen verfahrbar angeordnet und werden zentral oder einzeln angetrieben.

Insbesondere wird die zu reckende Materialbahn, in einer Einlaufzone mittels der Kluppen erfasst, die auf beiden Seiten der zu reckenden Materialbahn auf umlaufendenden Führungsschienen verfahrbar angeordnet sind. Die Kluppen werden dabei nacheinander von einer Einlaufzone über eine Reckzone zu einer Auslaufzone und dann auf einem Rückweg wieder zur Einlaufzone verfahren, wobei die Folie in der Auslaufzone beispielsweise einer gewissen Relaxation und/ oder Wärmenachbehandlung unterzogen werden kann.

Um die Materialbahn in der Einlaufzone zu erfassen/zu greifen werden die Kluppen von einer geöffneten in eine geschlossene Stellung (Greifstellung) überführt. Typischerweise umfasst eine Kluppe zumindest zwei Klemmflächen, die sich im Wesentlichen gegenüberliegen und dem Greifen der Materialbahn dienen. Durch die Betätigung eines Hebels (auch als Messerklappe bezeichnet) können die Klemmflächen bis in die Greifstellung aufeinander zu beweget werden. Zudem dient die Messerklappe dem Öffnen der Kluppe, um die Materialbahn nach dem Recken wieder freizugeben. Insbesondere müssen die Kluppen nach dem Recken wieder geöffnet werden. Das Öffnen erfolgt typischerweise nach dem Durchlaufen einer Weiterheiz- oder Kühlzone durch die die gereckte Folie mittels der Kluppen geführt wird. Nachdem die Kluppen auf einer umlaufenden Führungsschiene rückgeführt wurden, greifen sie die Materialbahn erneut (an andere Stelle) und durchlaufen anschließend wieder den Reckbereich der Reckanlage. Um die Materialbahn erneut greifen zu können, müssen die Kluppen geöffnet sein.

Bei bestehenden Reckanlagen, insbesondere bei Folienreckanlagen, erfolgt das Öffnen der Kluppen nicht immer zuverlässig, sodass die geöffnete Stellung der Kluppe nicht erreicht wird. In diesem Fall bleibt die Kluppe in einem teilgeöffneten Zustand oder schließt sich sogar wieder. Somit könnte diese Kluppe die Materialbahn nicht erneut greifen, sodass Schäden an der Anlage und/oder der zu reckenden Folie drohen. Um dies zu verhindern, werden oftmals mechanische Zwangsöffnereinrichtungen eingesetzt. Bekannte Zwangsöffnereinrichtungen, wie Öffnerräder oder Öffnerleisten, stellen einen Anschlag bereit, der an nicht vollständig geöffnete Kluppen bzw. geschlossenen Kluppen anschlägt, wenn diese Kluppen an der Zwangsöffnereinrichtung vorbeigeführt werden. Mittels des Anschlags werden die Kluppen zwangsweise über einen sehr kurzen Weg und somit in kurzer Zeit geöffnet.

Dieses Anschlagen und schnelle Öffnen führt zu einer sehr hohen mechanischen Belastung, sodass die Standzeit der Kluppen deutlich reduziert wird. Bricht ein Teil der Kluppe, wie die Messerklappe oder ein andere Teil des Greifmechanismus, aufgrund der Schlagbelastung, kann es auch dazu kommen, dass andere Teile der Folienreckanlage beschädigt werden und/oder dass es zu Stillstandzeiten und somit zu Produktionsausfällen kommt.

Insbesondere bei sehr schnell laufenden Reckanlagen (Produktionsgeschwindigkeit beispielsweise >500m/min mit einer entsprechenden Kluppen-Fahrgeschwindigkeit) beispielsweise zur Herstellung von PET, PE, PP, PA Folien und dergleichen, wie BO-Anlagen, d.h. Anlagen auf denen die Folie in Quer- und Längsrichtung gereckt wird, sollen solche Zwangsöffnungen vermieden werden. Allerdings sinkt die Öffenrate bekannter magnetischer - und somit anschlagfreier - Öffnereinrichtungen mit zunehmender Kluppen-Fahrgeschwindigkeit.

Zudem ist die Öffenrate bekannter anschlagfreier Öffnereinrichtungen oftmals unzureichend, wenn die Kluppen schwer zu öffnen sind. Dies ist u.a. bei großen Foliendicken, bei verklebten Messerklappen oder bei hohem Querfilmzug (d.h. bei hohen Querreckkräften) der Fall.

**Beschreibung der Erfindung**

Es ist daher die Aufgabe der vorliegenden Erfindung eine Vorrichtung bereitzustellen, die ein zuverlässiges Öffnen der Kluppen - auch bei hohen Kluppen-Fahrgeschwindigkeiten und/oder schwer zu öffnenden Kluppen - ermöglicht. Zudem soll der Verschleiß beim Öffnen der Kluppen reduziert werden.

Die Aufgabe wird insbesondere durch eine Öffnereinrichtung nach Anspruch 1 sowie durch eine Reckanlage nach Anspruch 14 gelöst. Weitere Aspekte der Erfindung sind in den abhängigen Ansprüchen sowie in der nachfolgenden Beschreibung aufgeführt.

Insbesondere wird die Aufgabe durch eine Öffnereinrichtung für das Öffnen von Kluppen, insbesondere von Kluppen einer Reckanlage gelöst. Die Kluppen können insbesondere Kluppen einer Folienreckanlage sein. Die Erfindung ist jedoch nicht auf Folienreckanlage beschränkt, sondern kann beispielsweise auch im Zusammenhang mit dem Recken von Textilen oder anderen verstreckbaren Materialien eingesetzt werden. Andere Anwendungsgebiete sind ebenso möglich.

Die erfindungsgemäße Öffnereinrichtung öffnet die Kluppe(n) insbesondere vollständig. D.h. die Kluppe wird mittels der Öffnereinrichtung von einer geschlossenen Stellung, in der die Kluppe eine Materialbahn greift bis in eine geöffnete Stellung überführt, sodass die Kluppe zum erneuten Greifen der Materialbahn (an anderer Stelle) eingerichtet ist.

Die Öffnereinrichtung umfasst zumindest ein Führungselement und zumindest ein Öffnerelement. Das zumindest eine Öffnerelement ist auf einer Umlaufbahn beweglich angeordnet. Umfasst die Öffnereinrichtung mehrere (zumindest zwei) Öffnerelemente, sind diese entsprechend auf der Umlaufbahn beweglich angeordnet. Das Öffnerelement/die Öffnerelemente werden also umlaufend geführt.

Das Führungselement führt das Öffnerelement auf zumindest einem Teil der Umlaufbahn. Das Führen des/der Öffnerelemente kann über ein oder mehrere Führungselemente erfolgen. Das zumindest eine Führungselement kann ein statisches Führungselement sein, sich also nicht bewegen, oder ein bewegtes Führungselement, insbesondere ein angetriebenes Führungselement sein. Insbesondere kann die Öffnereinrichtung zumindest ein bewegtes (insbesondere angetriebenes) und zumindest ein statisches Führungselement umfassen.

Die Umlaufbahn umfasst einen Öffnerabschnitt, der sich von einem Kontaktpunkt zu einem Abhebepunkt erstreckt. Der Kontaktpunkt ist ein Punkt, an dem eine zu öffnende Kluppe (d.h. eine geschlossene oder teilweise geschlossene Kluppe) mit dem Öffnerelement in Kontakt kommt. Der Abhebepunkt ist ein Punkt ist, bei dem der Kontakt zwischen der geöffneten Kluppe (d.h. der vormals geschlossenen oder teilweise geschlossenen Kluppe) und dem Öffnerelement wieder gelöst wird. Das Öffnerelement ist dazu eingerichtet die zu öffnende Kluppe im Öffnerabschnitt zu öffnen. Insbesondere wird durch den Kontakt zwischen Öffnerelement und Kluppe (bzw. Messerklappe der Kluppe) die Messerklappe so betätigt, dass die Kluppe von einer (teilweise) geschlossenen Stellung in eine geöffnete Stellung überführt wird. Eine zuvor gegriffene Materialbahn wird also beim Öffnen der Kluppe freigegeben, sodass die nun geöffnete Kluppe (insbesondere nach dem Rückführen auf einer umlaufenden Führungsschiene) wieder geschlossen werden kann, um die Materialbahn erneut zu greifen.

Die Öffnereinrichtung erlaubt ein zuverlässiges Öffnen der Kluppen unabhängig von der Materialdicke der gegriffenen Materialbahn, da die Kluppen in einem Öffnerabschnitt geöffnet werden.

Die Materialdicke beeinflusst die Stellung der Messerklappe der Kluppe im geschlossenen Zustand. Mithin kann auch die Position des Kontaktpunkts durch die Materialdicke verändert werden. Der Abhebepunkt ist jedoch von der Materialdicke im Wesentlichen unabhängig. Dieser wird vorzugsweise so gewählt, dass die Kluppe bis zum Abheben (d.h. beim Lösen des Kontakts zwischen der geöffneten Kluppe und dem Öffnerelement) zuverlässig in den geöffneten Zustand überführt wurde, oder diesen geöffneten Zustand nach dem Abheben noch zuverlässig erreicht. Beispielsweise kann die Messerklappe der Kluppe nach dem Abheben noch vollständig in die geöffnete Stellung schwingen. So wird verhindert, dass die Messerklappe durch die Öffnereinrichtung auf einen Anschlag der Kluppe aufgeschoben wird.

Insbesondere ist die Öffnereinrichtung dazu eingerichtet, die Kluppen derart zuverlässig zu öffnen, dass keine weiteren Öffnereinrichtungen oder Öffnersysteme, wie Zwangsöffner (Öffnerrad, Öffnerleiste, ...) und/oder magnetische Öffnereinrichtungen benötigt werden. Zwangsöffner haben den Nachteil, dass die Kluppen gegen den Zwangsöffner schlagen und somit ruckartig geöffnet werden. Dies führt - insbesondere bei hohen Kluppen-Fahrgeschwindigkeiten - zu einem hohen Verschleiß. Die hier beschriebene Öffnereinrichtung zeichnet sich durch einen geringen Verschleiß an der Öffnereinrichtung und den Kluppen aus, da die Kluppen über den Öffnerabschnitt hinweg und somit nicht ruckartig geöffnet werden.

Magnetische Öffnereinrichtungen haben den Nachteil, dass die Öffnerkraft nur beschränkt ist und ein zuverlässiges Öffnen der Kluppen nicht gewährleistet werden kann. Um das Öffnen so zuverlässig wie möglich zu erreichen, müssen magnetische Öffner sehr exakt ausgerichtet. Dies ist mit einem erheblichen Aufwand verbunden. Zudem wirkt die magnetische Kraft nicht nur auf die Kluppen bzw. deren Messerklappe, sondern auch auf weitere Bauteile (beispielsweise eine Kluppen-Antriebskette), die durch die magnetische Öffnerkraft ausgelenkt werden können. Daher müssen teilweise Niederhalter vorgesehen werden, die ein solches Auslenken verhindern. Die hier beschriebene Öffnereinrichtung ist weniger komplex und ermöglicht dennoch ein sehr zuverlässiges Öffnen der Kluppen.

Die Kluppen können einen Kluppenöffnungsweg K aufweisen. Der Kluppenöffnungsweg K ist ein Weg, den eine Messerklappe der Kluppe bewegt werden muss, um die Kluppe von einem geschlossenen Zustand in einen geöffneten Zustand zu überführen. Der Kluppenöffnungsweg liegt beispielsweise in einem Bereich von 20 mm bis 100 mm, vorzugsweise in einem Bereich von 30 mm bis 90 mm, insbesondere bevorzugt in einem Bereich von 40 mm bis 80 mm, oder in einem Bereich von 55 mm bis 70 mm. Maßgeblich für die Messung des Kluppenöffnungswegs ist der Punkt, an dem das Öffnerelement die Kluppe (bzw. die Messerklappe der Kluppe) kontaktiert.

Die Messerklappe kann translatorisch oder rotatorisch bewegbar sein. Bei einer rotatorischen Bewegung ergibt sich der Kluppenöffnungsweg "K" aus dem Abstand "r" des Drehpunktes der Messerklappe bis zu dem Punkt, an dem das Öffnerelement die Kluppe (bzw. die Messerklappe der Kluppe) kontaktiert und dem Winkelbereich o, der beim Öffnen der Kluppe zurückgelegt wird. Beispielsweise lässt sich der Kluppenöffnungsweg wie folgt berechnen:

$$K = 2\,r\sin\frac{\alpha}{2}$$

Der Öffnerabschnitt der Umlaufbahn hat vorzugsweise zumindest die 1,5 fache Länge L des Kluppenöffnungswegs (L ≥ 1,5K), insbesondere zumindest die 2 fache Länge des Kluppenöffnungswegs (L ≥ 2K), zumindest die 4 fache Länge des Kluppenöffnungswegs (L ≥ 4K), zumindest die 5 fache Länge des Kluppenöffnungswegs (L ≥ 5K), oder zumindest die 6 fache Länge des Kluppenöffnungswegs (L ≥ 6K). Insbesondere kann der Öffnerabschnitt eine Länge im Bereich von 30 mm bis 600 mm, oder im Bereich von 100 mm bis 550 mm, oder im Bereich von 150 mm bis 500 mm, oder im Bereich von 200 mm bis 400 mm aufweisen.

Dieser lange Öffnerabschnitt ermöglicht ein geführtes Öffnen der Kluppen, ohne ruckartiges Anschlagen, sodass der Verschleiß minimiert werden kann. Zudem können Kluppen zuverlässig geöffnet werden, deren Messerklappen in unterschiedlichen Stellungen die Öffnereinrichtung erreichen. Abhängig von der Stellung der Messerklappe kontaktiert die Messerklappe das Öffenelement an einer unterschiedlichen Stelle - der Kontaktpunkt ist mithin unterschiedlich. Im Abhebepunkt weisen alle Messerklappen dann jedoch den gleichen Öffnungsgrad auf.

Insbesondere kann die Umlaufbahn von einer Kreisform abweichen, und/oder einen zumindest im Wesentlichen linearen Abschnitt umfassen. Dieser im Wesentlichen lineare Abschnitt kann den Öffnerabschnitt umfassen oder bilden. Ein (im Wesentlichen) linearer Abschnitt/Öffnerabschnitt ermöglicht ein gleichmäßiges führen der Kluppen beim Öffnen. Insbesondere kann das Öffnerelement ab dem Kontaktpunkt bis zum Abhebepunkt die Kluppe beim Öffnen so führen und/oder die Messerklappe der Kluppe so betätigen, dass das Öffnen sehr gleichmäßig (ohne Schläge oder ruckartige Bewegungen) erfolgt.

Weiterhin kann die Öffnereinrichtung so positioniert und orientiert sein, dass eine Linie, die den Kontaktpunkt mit dem Abhebepunkt der Umlaufbahn verbindet einen Winkel mit einer Bewegungsrichtung der Kluppen einschließt, der im Bereich von 0° bis 20°, insbesondere im Bereich von 3° bis 15°, oder im Bereich von 4° bis 8° liegt. Dieser spitze Winkel ermöglicht, dass das Öffnerelement ab dem Kontaktpunkt bis zum Abhebepunkt die Kluppe beim Öffnen so führen und/oder die Messerklappe der Kluppe so betätigen kann, dass das Öffnen sehr gleichmäßig (ohne Schläge oder ruckartige Bewegungen) erfolgt.

Der Abhebepunkt der Umlaufbahn kann weiter von einer Materialbahnebene M einer von den Kluppen gehaltenen Materialbahn entfernt liegen, als der Kontaktpunkt der Umlaufbahn. Bezogen auf die Materialbahnebene steigt die Umlaufbahn somit vom Kontaktpunkt zum Abhebepunkt an. Durch diese Orientierung der Umlaufbahn kann das Öffnen der Kluppen durch das auf der Umlaufbahn geführte Öffnerelement unterstützt werden.

Die Öffnereinrichtung kann einen Antrieb umfassen, wobei dieser Antrieb so eingerichtet sein kann um mit einer Kluppen-Fahrgeschwindigkeit synchronisiert zu werden. Die Synchronisierung des Antriebs mit der Kluppen-Fahrgeschwindigkeit kann so erfolgen, dass im Wesentlichen kein Schlupf (keine Relativgeschwindigkeit) zwischen den zu öffnenden Kluppen und dem Öffnerelement besteht (insbesondere im Kontaktpunkt), oder es kann ein gewünschter Schlupf eingestellt werden. Die Synchronisation kann derart sein, dass das zumindest ein Öffnerelement gegenüber einer zu öffnenden Kluppe einen Schlupf im Bereich von -10% bis +10%, vorzugsweise im Bereich von -5% bis +5% und insbesondere im Bereich von 0% bis +3% aufweist. Somit kann die mechanische Belastung beim Auftreffen der Kluppen (bzw. deren Messerklappe) auf dem Öffnerelement reduziert werden und das Öffnen durch das Öffnerelement geführt werden. Die Standzeit der Kluppen und des zumindest einen Öffnerelements kann somit verlängert werden.

Der Antrieb kann ein direkter oder ein indirekter Antrieb sein. Beispielsweise kann der Antrieb einen Riemen- oder Kettentrieb und/oder einen Elektromotor, beispielsweise einen Synchronmotor umfassen.

Zudem kann die Öffnereinrichtung dazu eingerichtet sein, dass die Position (z.B. MD-, TD-, und/oder vertikale Richtung relativ zur Materialbahnebene) und/oder Orientierung (beispielsweise Winkellage relativ zur Bewegungsrichtung der Kluppen und/oder relativ zur Materialbahnebene) des Öffnerabschnitts verstellbar ist. Hierzu kann die Öffnereinrichtung zumindest einen Positionierantrieb umfassen. Der zumindest eine Positionierantrieb dient dem Verstellen der Position und/oder Orientierung des Öffnerabschnitts.

Beispielsweise kann eine Position des Öffnerabschnitts in TD-Richtung und/oder MD-Richtung verstellbar sein. Zum Verstellen der Position des Öffnerabschnitts kann die Öffnereinrichtung zumindest einen Positionierantrieb umfassen, oder das Verstellen kann manuell erfolgen. Der zumindest eine Positionierantrieb kann beispielsweise zumindest einen Linearmotor und/oder eine Linearführung umfassen. Ebenso kann der Positionierantrieb ein Getriebe, wie beispielsweise eine Trapezgewindespindel umfassen, das eine rotierende Antriebsbewegung in eine lineare Bewegung umsetzt.

Der Begriff MD-Richtung steht für "Maschinenrichtung", während der Begriff TD-Richtung für "Querrichtung" steht. Die MD-Richtung bezieht sich auf die Richtung, in der die Materialbahn (insbesondere eine Kunststofffolie) durch die Reckanlage geführt wird. Es ist also die Hauptbewegungsrichtung entlang der Länge der Materialbahn. Die TD-Richtung hingegen bezieht sich auf die Richtung, die senkrecht zur MD-Richtung steht (in der Materialbahnebene).

Weiterhin kann die Position des Öffnerabschnitts in vertikaler Richtung verstellbar sein. Die vertikale Richtung ist eine Richtung, die vertikal auf der Materialbahnebene steht. Somit könnte der Öffnerabschnitt in drei Richtungen (MD, TD und vertikal) positioniert werden. Entsprechend kann auch die Orientierung des Öffnerabschnitts verstellbar sein. Vorzugsweise ist die Position und/Orientierung des Öffnerabschnitts in MD-, TD- und/oder vertikaler Richtung bzw. den entsprechenden Winkellagen unabhängig voneinander verstellbar. Hierzu können separat ansteuerbare/verstellbare Bewegungsachsen bzw. Positionierantriebe vorgesehen sein.

Die Position und/oder Orientierung kann so eingestellt werden, dass das das Öffnen geführt wird, ohne dass die Messerklappen ruckartig an dem Öffnerelement anschlagen. Somit kann der Verschleiß reduziert werden. Insbesondere kann die Position und/oder Orientierung des Öffnerabschnitts verstellt werden, indem zumindest ein Führungselement in seiner Position und/oder Orientierung verändert wird.

Insbesondre kann die Öffnereinrichtung eine Steuereinrichtung umfassen, die die Position und/oder Orientierung des Öffnerabschnitts und/oder eine Antriebsgeschwindigkeit des Antriebs der Öffnereinrichtung verändern, insbesondere regeln kann. Hierzu kann die Steuereinrichtung den Antrieb und/oder den Positionierantrieb steuern. So kann ein gewünschter Schlupf und/oder eine gewünschte Position/Orientierung eingestellt werden. Insbesondere kann die Lage des Kontaktpunkts und/oder des Abhebepunkts der Umlaufbahn eingestellt werden, um ein zuverlässiges Öffnen der Kluppen zu gewährleisten.

Das zumindest eine Öffnerelement kann einen konturierten Querschnitt aufweisen. Dieser konturierte Querschnitt kann an einen Kontaktbereich einer Messerklappe einer zu öffnenden Kluppe angepasst sein, vorzugsweise derart, dass eine Position des Kontaktpunktes in MD-Richtung unabhängig von der Filmranddicke der von der teils zu öffnenden Kluppe gehaltenen Materialbahn (z.B. Folie) ist. Die Kontur erlaubt es eine ideale Öffnung der Kluppe zu erzielen und dabei kleinere Schwankungen in der Filmranddicke auszugleichen.

In einem Aspekt der Erfindung ist das Öffnerelement ein Öffnerriemen und das zumindest ein Führungselement umfasst eine (vorzugsweise angetriebene) Riemenscheibe. Ebenso können mehrere (zumindest zwei) Riemenscheiben vorgesehen sein. Die Umlaufbahn kann durch die Anzahl, Position und Orientierung der Riemenscheiben nahezu in beliebige Form gebracht werden. Beispielsweise ist die Umlaufbahn im Wesentlichen dreieckig, wobei an den Eckpunkten entsprechend Riemenscheiben zur Umlenkung und/oder zum Antreiben des Riemens vorgesehen sind.

Der Riemen kann auf einer der Riemenscheibe abgewandten Seite einen konturierten Querschnitt aufweisen, der an einen Kontaktbereich einer Messerklappe einer zu öffnenden Kluppe angepasst ist. Zum Antreiben kann der Riemen auf einer der Riemenscheibe zugewandten Seite eine Kleiriemenform oder eine Zahnriemenform aufweisen.

Zudem kann der Riemen mittels der Riemenscheibe auf einer Umlaufbahn geführt werden, um mit der/den zu öffnenden Kluppen in Kontakt zu kommen und diese im Öffnerabschnitt der Umlaufbahn zu öffnen. Hierzu kommt die Kluppe mit dem Riemen am Kontaktpunkt in Kontakt. Der Öffnerabschnitt der Umlaufbahn ist so positioniert und orientiert, dass der Riemen (d.h. das Öffnerelement) die Kluppe öffnet (z.B. durch Betätigen der Messerklappe). Am Abhebepunkt löst sich der Kontakt wieder. Die Länge des Öffnerabschnitts kann so gewählt sein, dass zeitgleich mehrere Kluppen mit dem Riemen in Kontakt sind.

In einem weiteren Aspekt der Erfindung ist das Öffnerelement ein Kettensegment oder ein Teil eines Kettensegments. Ist das Öffnerelement Teil eines Kettensegments, kann das Öffnerelement an dem eigentlichen Kettensegment befestigt sein (angeschraubt, angeschweißt, genietet, oder in sonstiger Weise befestigt). Mehrere Kettensegmente bilden eine Kette, die auf der Umlaufbahn von dem zumindest einen Führungselement geführt wird. Das zumindest ein Führungselement umfasst in diesem Fall ein (vorzugsweise angetriebenes) Kettenrad. Ebenso können mehrere (zumindest zwei) Kettenräder vorgesehen sein. Die Umlaufbahn kann durch die Anzahl, Position und Orientierung der Kettenräder nahezu in beliebige Form gebracht werden. Beispielsweise ist die Umlaufbahn im Wesentlichen dreieckig, wobei an den Eckpunkten entsprechend Kettenräder zur Umlenkung und/oder zum Antreiben der Kette vorgesehen sind.

Die Kettensegmente, oder Teile der Kettensegmente können einen konturierten Querschnitt aufweisen, der an einen Kontaktbereich einer Messerklappe einer zu öffnenden Kluppe angepasst ist. Zudem kann die Kette mittels der Kettenräder auf der Umlaufbahn geführt werden, um mit der/den zu öffnenden Kluppen in Kontakt zu kommen und diese im Öffnerabschnitt der Umlaufbahn zu öffnen. Hierzu kommt die Kluppe mit dem Öffnerelement am Kontaktpunkt in Kontakt. Der Öffnerabschnitt der Umlaufbahn ist so positioniert und orientiert, dass das Öffnerelement die Kluppe öffnet (z.B. durch Betätigen der Messerklappe). Am Abhebepunkt löst sich der Kontakt wieder. Die Länge des Öffnerabschnitts kann so gewählt sein, dass zeitgleich mehrere Kettensegmente im Öffnerabschnitt geführt werden und so mehrere Kluppen mit der Kette in Kontakt sind. Die Länge der einzelnen Kettensegmente kann dabei so bemessen sein, dass ein Öffnerelement einer Kluppe zugeordnet ist. Zudem können die Kettensegmente so gestaltet sein, dass jedenfalls über den Öffnerabschnitt eine im wesentlichen geschlossene Fläche aus mehreren benachbarten Kettensegmenten gebildet wird, wobei die Fläche mit dem Kontaktbereich der jeweiligen Messerklappen in Kontakt kommt.

In einem weiteren Aspekt der Erfindung umfasst das Führungselement eine Kurvenscheibe, wobei die Form der Kurvenscheibe die Umlaufbahn bestimmt.

Die Kurvenscheibe führt eine Vielzahl von Öffnerelementen auf der Umlaufbahn. Diese Öffnerelemente sind insbesondere Öffnerrollen. Durch die Wahl der Form der Kurvenscheibe kann die Umlaufbahn bestimmt werden. In einem Aspekt hat die Umlaufscheibe einen im Wesentlichen linearen Abschnitt, der den Öffnerabschnitt umfasst und/oder bildet. Die Öffnerelemente werden entlang der Kurvenscheibe, d.h. auf der Umlaufbahn, geführt, sodass die Öffnerelemente mit der/den zu öffnenden Kluppen in Kontakt kommen und diese im Öffnerabschnitt der Umlaufbahn öffnen. Hierzu kommt die Kluppe mit einem entsprechenden Öffnerelement am Kontaktpunkt in Kontakt. Der Öffnerabschnitt der Umlaufbahn ist so positioniert und orientiert, dass das Öffnerelement die Kluppe öffnet (z.B. durch Betätigen der Messerklappe). Am Abhebepunkt löst sich der Kontakt wieder. Die Länge des Öffnerabschnitts kann so gewählt sein, dass zeitgleich mehrere Öffnerelemente im Öffnerabschnitt geführt werden und so mehrere Kluppen geöffnet werden könne (in Serie). Die Größe (insbesondere der Durchmesser der Öffnerrollen) der einzelnen Öffnerelemente kann dabei so bemessen sein, dass ein Öffnerelement einer Kluppe zugeordnet ist.

Die Öffnerelemente können insbesondere federnd gelagert sein. Die Federrichtung kann dabei so orientiert sein, dass diese (im Öffnerabschnitt) in einer Kluppen-Aktuierungsrichtung liegt. Diese ist vorzugsweise im Wesentlichen senkrecht zum Öffnerabschnitt (bzw. einer Linie die den Kontaktpunkt und den Abhebepunkt verbindet) oder zu der Bewegungsrichtung der Kluppen. Die Kluppen-Aktuierungsrichtung ist die Richtung, in der eine Messerklappe der Kluppen bewegt werden muss, um die Kluppe zu öffnen.

Diese federnde Lagerung kann beispielsweise über Federelemente, insbesondere Stößelelemente, erfolgen. Die Federelemente/Stößelelemente können an einer Antriebsscheibe der Öffnereinrichtung angeordnet sein und sich von dieser im Wesentlichen radial nach außen erstrecken. Die Federelemente /Stößelelemente verbinden beispielsweise die Öffnerelemente mit der Antriebsscheibe, um die Öffnerelemente auf der Umlaufbahn anzutreiben. Die federnde Lagerung ermöglicht es, dass die Öffnerelemente auf der durch die Kurvenscheibe definierten Umlaufbahn geführt werden. In diesem Beispiel ist die Kurvenscheibe ein statisches Führungselement und die Antriebsscheibe ein bewegtes Führungselement.

Weiterhin wird die Aufgabe durch eine Reckanlage, insbesondere eine Quer-, Längs- und/oder Simultan-Reckanlage gelöst, die eine Vielzahl von Kluppen zum Greifen einer zu reckenden Materialbahn (z.B. Folie) umfasst. Zudem umfasst die Reckanlage zumindest eine Öffnereinrichtung der vorgenannten Art. Typischerweise werden die Kluppen auf zumindest zwei Schienen umlaufend geführt, wobei die zu reckende Materialbahn zwischen den Schienen angeordnet ist. Jeder der Schienen kann eine Öffnereinrichtung zugeordnet sein.

Insbesondere kann die Reckanlage neben der oben beschriebenen erfindungsgemäßen Öffnereinrichtung/Öffnereinrichtungen keine weiteren Öffnereinrichtungen oder Öffnersysteme, wie Zwangsöffner (Öffnerrad, Öffnerleiste, ...) und/oder magnetische Öffnereinrichtungen umfassen. Die erfindungsgemäße Öffnereinrichtung hat den Vorteil, dass selbst bei Stillstand des/der Öffnerelemente eine Öffnung der Kluppen erfolgt. Denn das/die im Öffenabschnitt befindlichen Öffnerelemente öffnen die Kluppen zuverlässig, unabhängig von deren Geschwindigkeit.

Bei Längsreckanlagen wird die Materialbahn in Längsrichtung (MD-Richtung) gereckt. Bei Querreckanlagen wird die Materialbahn in Querrichtung (TD-Richtung) gereckt. Längs- und Querreckanlagen sind oft kombiniert, sodass zuerst eine Längsreckung und anschließend eine Querreckung (oder andersherum) erfolgt. Bei Simultanreckanlagen erfolgt die Reckung in Längs- und Querrichtung gelichzeitig.

Die Reckanlage kann eine Folienreckanlage sein, insbesondere zur Reckung von Kunststofffolien, wie PET, PE, PP und/oder dergleichen. Die Endfilmdicken der gereckten Folien können im Bereich von 3 bis 200 $\mu$m, bevorzugt im Bereich von 5 bis 150 $\mu$m und insbesondere im Bereich von 7 bis 75 $\mu$m liegen. Die Kluppen-Fahrgeschwindigkeit ist beispielsweise größer als 400 m/min, vorzugsweise größer als 450 m/min und insbesondere bevorzugt größer als 500 m/min oder sogar größer als 600 m/min oder noch größer.

## Kurze Beschreibung der Zeichnungen

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:

Fig. 1      eine schematische Darstellung einer Reckanlage;

Fig. 2      eine weitere schematische Darstellung einer Reckanlage;

Fig. 3      eine schematische Darstellung einer Kluppeneinheit;

Fig. 4      eine schematische Detaildarstellung einer Kluppeneinheit;

Fig. 5A     eine schematische Darstellung einer Öffnereinrichtung;

Fig. 5B     eine schematische Darstellung einer Öffnereinrichtung;

Fig. 6A     eine schematische Darstellung einer Öffnereinrichtung;

Fig. 6B     eine Detailansicht der Öffnereinrichtung aus Fig. 6A;

Fig. 7A     eine schematische Darstellung einer Öffnereinrichtung, und

Fig. 7B     eine Detailansicht der Öffnereinrichtung aus Fig. 7A.

**Ausführliche Beschreibung der Zeichnungen**

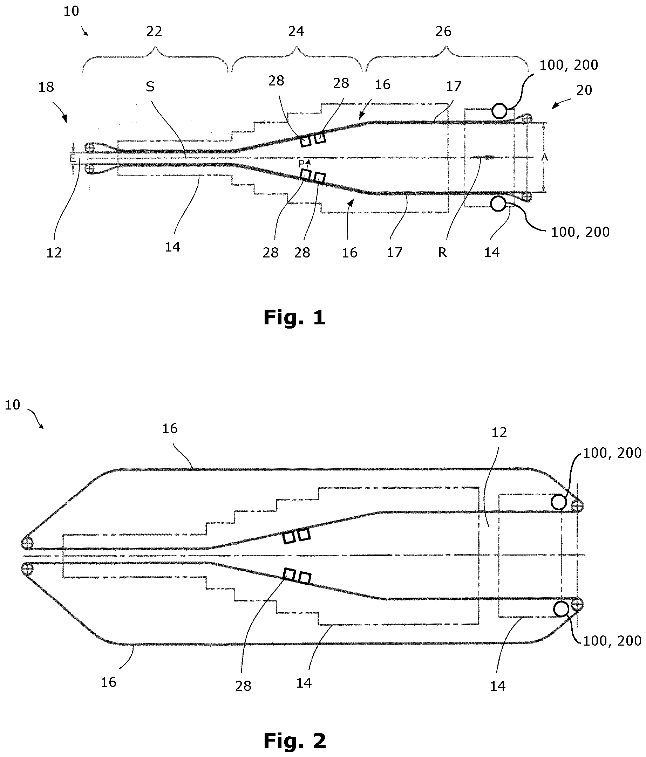

Fig. 1 und Fig. 2 zeigen jeweils eine exemplarische Reckanlage 10. Die Reckanlage 10 weist einen Ofen 14 sowie zwei Antriebssysteme 16 auf. Die Antriebssysteme 16 sind hier gegenüber einer Symmetrieachse S der Reckanlage 10 spiegelsymmetrisch angeordnet und erstrecken sich zumindest teilweise im Ofen 14. In einer Einlaufzone 18 sowie einer Auslaufzone 20, in denen eine Materialbahn 12 der Reckanlage 10 zu- bzw. abgeführt wird, verlaufen die Antriebssysteme 16 außerhalb des Ofens 14. Es versteht sich, dass die Antriebssysteme 16 auch vollständig innerhalb des Ofens 14 geführt werden können.

Neben der Einlaufzone 18 und der Auslaufzone 20 weist die Reckanlage zumindest drei weitere Zonen 22, 24, 26 auf. Die Zonen 22, 24, 26 grenzen aneinander an, sodass - entlang der üblichen Bewegungs- bzw. Abzugsrichtung R der Reckanlage 10 betrachtet - an die Einlaufzone 18 zunächst die erste Zone 22, dann die zweite Zone 24, dann die dritte Zone 26, und schließlich die Auslaufzone 20 anschließt.

In der an die Einlaufzone 18 angrenzenden ersten Zone 22 der Reckanlage 10, auch Vorheizzone genannt, haben die Antriebssysteme 16 einen ersten Abstand zueinander.

In der zweiten Zone 24, auch Reckzone genannt, vergrößert sich der Abstand der beiden Antriebssysteme 16 zueinander, bis schließlich zu Beginn der dritten Zone 26, auch Wärmebehandlungszone genannt, ein zweiter Abstand erreicht ist. Nach der Wärmebehandlungszone 26 können sich weitere Zonen anschließen. Ebenso können zwischen den beschriebenen Zonen 22, 24, 26 weitere Zonen vorgesehen sein. Beispielsweise kann nach der Wärmebehandlungszone 26 eine Kühlzone vorgesehen sein, in welcher die gereckte und wärmebehandelte Folie weiter abgekühlt wird.

Jedes der Antriebssysteme 16 umfasst eine Schiene 17, an der eine Vielzahl von Kluppen 28 geführt sind. Die Kluppen 28 können durch einen Antrieb des jeweiligen Antriebssystems 16 entlang der Schiene 17 bewegt werden. Ebenso ist es möglich, dass die Kluppen direkt angetrieben sind. In diesem Fall sind die Schienen 17 beispielsweise als Linearmotor ausgebildet.

In Fig. 1 und 2 sind jeweils nur zwei Kluppen 28 pro Antriebssystem 16 symbolisch dargestellt. Die Reckanlage 10 weist jedoch eine Vielzahl von Kluppeneinheiten 28 auf, die entlang der Schienen 17 angeordnet sind.

Die Schienen 17 der jeweiligen Antriebssysteme 16 beschreiben eine geschlossene Bahn von der Einlaufzone 18 zur Auslaufzone 20 und zurück. Der Schienenabschnitt, der den Vorlauf bildet, erstreckt sich in vorgesehener Bewegungsrichtung der Kluppeneinheiten 28 zwischen der Einlaufzone 18 und der Auslaufzone 20 innerhalb des Ofens 14.

Der Schienenabschnitt, der in üblicher Betriebsrichtung von der Auslaufzone 20 zur Einlaufzone 18 verläuft und den Rücklauf bildet, ist im gezeigten Ausführungsbeispiel (Fig. 1) ebenfalls innerhalb des Ofens 14 angeordnet. Er kann jedoch auch, wie in der Ausführungsform nach Figur 2 gezeigt, außerhalb des Ofens 14 angeordnet sein.

Zum Betrieb der Reckanlage 10 wird die zu reckende Materialbahn 12 in der Einlaufzone 18 der Reckanlage 10 in Abzugsrichtung R zugeführt. Hierzu wird die Materialbahn 12 mittels ihrer in Abzugsrichtung R verlaufenden Kanten an beiden Antriebssystemen 16 befestigt.

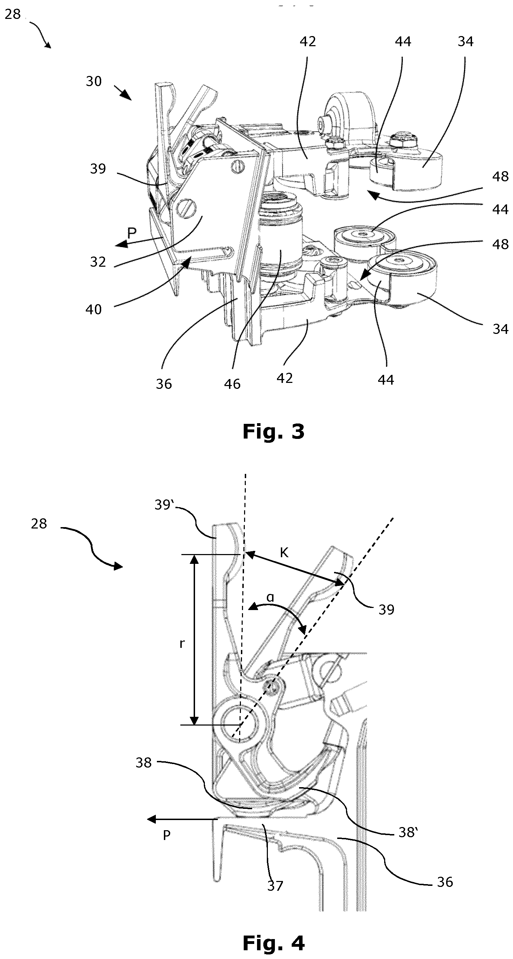

Genauer gesagt werden die Ränder der Materialbahn 12 (beispielsweise ein Folienrand) durch eine Klemmvorrichtung 30 (Fig. 3) der Kluppen 28 fixiert und somit durch die Bewegung der Kluppen 28 entlang der Schienen 17 des Antriebssystems 16 in Abzugsrichtung (MD-Richtung) bewegt.

In der Einlaufzone 18 hat die Materialbahn 12 eine Breite E senkrecht zur Abzugsrichtung R, die in etwa dem ersten Abstand zwischen den Antriebssystemen 16 entspricht.

Die Materialbahn 12 wird dann durch die erste Zone 22 geführt und dort erwärmt. In der anschließenden zweiten Zone 24, also der Reckzone, wird die Materialbahn 12 gereckt, da sich der Abstand der Antriebssysteme 16 kontinuierlich vergrößert. Zum Ende der zweiten Zone 24 weist die Materialbahn 12 eine zweite Breite A auf.

Nach erfolgter Reckung durchläuft die Materialbahn 12 nun die dritte Zone 26, bei der eine Relaxierung der Materialbahn 12 erfolgen kann, bevor die Materialbahn 12 in der Auslaufzone 20 von den Kluppeneinheiten 28 gelöst wird und sie die Reckanlage 10 mit der Breite A verlässt.

Beispielsweise ist die Reckanlage 10 eine Quer-Reckanlage. Denkbar ist auch, dass die Reckanlage 10 eine Längsreckanlage ist, in der die Materialbahn in Längsrichtung (also in Abzugsrichtung R) gereckt wird. Ebenso kann die Reckanlage eine Längs- und eine Querreckung umfassen, wobei Längs- und Querreckung nacheinander erfolgen.

Zudem kann die Reckanlage 10 eine Simultanreckanlage sein, in der die Materialbahn 12 in der zweiten Zone 24, also der Reckzone, nicht nur in Richtung quer zur Abzugsrichtung R (d.h. TD-Richtung) sondern auch in der Abzugsrichtung R gereckt werden kann.

Während der Verarbeitung der Materialbahn 12 wirken vor allem in der zweiten Zone 24, also der Reckzone, auf die Kluppeneinheiten 28 große Zugkräfte in eine Zugrichtung. Die Zugrichtung hat eine überwiegende Komponente in eine Primärrichtung P der Kluppeneinheiten 28 und eine kleinere Komponente quer zur Primärrichtung P.

Die Kluppeneinheiten 28 müssen somit dazu ausgebildet sein, die hohen auftretenden Zugkräfte auszuhalten, insbesondere in ihrer Primärrichtung P. Die Primärrichtung P ist dabei diejenige horizontale Richtung, die quer zu einer in der Kluppeneinheit 28 aufgenommenen Kante der Materialbahn 12 verläuft.

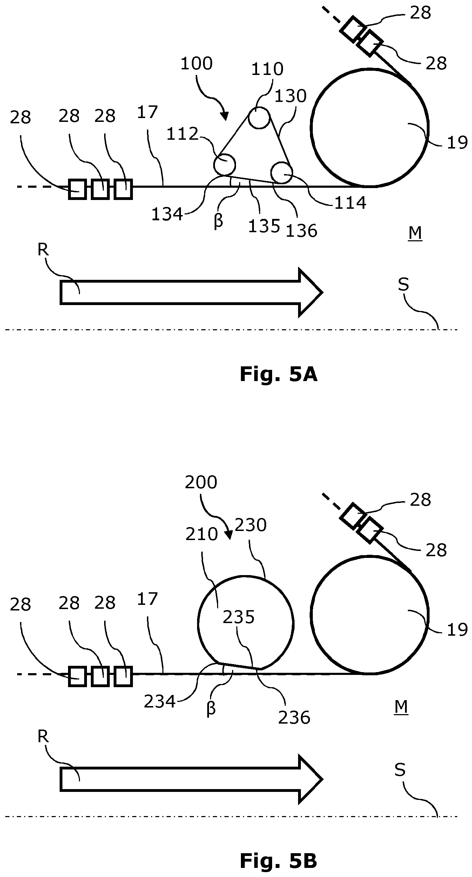

Um diese Zugkräfte zuverlässig aufzunehmen, werden die Kluppeneinheiten bzw. Kluppen 28 in der Einlaufzone 18 geschlossen und greifen die Materialbahn 12. In der Auslaufzone werden die Kluppen 28 wieder geöffnet und die gereckte Materialbahn 12 wird ausgekluppt. Zum Öffnen der Kluppen sind Öffnereinrichtungen 100, 200 vorgesehen, sodass die Kluppen im geöffneten Zustand in der Einlaufzone 18 eintreffen. Mögliche Öffnereinrichtungen 100, 200 sind in den Figuren 5A bis 7B im Detail dargestellt.

In Fig. 3 ist eine der Kluppen bzw. Kluppeneinheiten 28 beispielhaft in einer perspektivischen Ansicht dargestellt. Fig.4 ist eine Detailansicht (Seitenansicht) der Kluppe 28. Die Kluppeneinheit 28 weist ein Hauptteil 32 sowie zwei Führungsteile 34 auf. Der Hauptteil 32 hat einen Grundkörper 36 und weist die eigentliche Klemmvorrichtung 30 auf, welche die Materialbahn 12 greift.

Die Seite des Grundkörpers 36, die an der die Klemmvorrichtung 30 vorgesehen ist, wird auch Materialseite genannt. Die andere Seite, d. h. die Seite des Grundkörpers 36 ohne die Klemmvorrichtung 30, wird Führungsseite genannt, da an dieser Seite die Führungsteile 34 befestigt sind. Diese Führungsteil 34 laufen auf den Schienen 17 der Antriebssysteme 16. Dementsprechend weist auch das Hauptteil 32 eine Materialseite und eine Führungsseite auf.

Die Klemmvorrichtung 30 ist im gezeigten Ausführungsbeispiel aus Abschnitten des Grundkörpers 36, insbesondere einer integral ausgeführten unteren Klemmfläche 37 und einer am Grundkörper 36 rotierbar befestigten Messerklappe 39, die eine oberen Klemmfläche 38 umfasst in an sich bekannter Weise ausgebildet. Die Klemmvorrichtung 30 definiert einen Befestigungsabschnitt 40 bzw. Befestigungsmund, in den der zu befestigende Rand der Materialbahn 12 eingeführt und mittels der oberen Klemmfläche 38 an der Kluppeneinheit 28 fixiert werden kann.

Die Primärrichtung P der Kluppeneinheit 28 ist senkrecht zum Rand bzw. der Kante der Materialbahn, die in der Kluppeneinheit 28 fixiert ist. Die Primärrichtung P verläuft beispielsweise in der Figur 3 im Wesentlichen nach links. Eine befestigte Materialbahn 12 übt in der zweiten Zone 24 (Reckzone) eine Zugkraft in der Zugrichtung, vornehmlich in der Primärrichtung P, auf die Kluppeneinheit 28 aus.

Die Führungsteile 34 weisen jeweils einen Grundkörper 42 sowie jeweils wenigstens ein Führungselement 44 auf, das am Grundkörper 42 befestigt ist. In der in Fig. 3 beispielhaft dargestellten Kluppeneinheit 28 weisen die Führungsteile 34 zudem ein Antriebselement 46 auf, das beispielsweise eine Kette bzw. Teile einer Kette des Antriebssystems 16 ist bzw. ist. Das Antriebselement 46 kann auch ein Eingriffsvorsprung für einen Riemen des Antriebssystems 16 oder Teil eines Linearmotors sein.

Im gezeigten Ausführungsbeispiel sind die Führungselemente 44 als Rollen ausgebildet. Die Führungselemente 44 können in anderen Ausführungsformen jedoch auch Gleitelemente und/oder magnetische Elemente, wie ein Permanentmagnet oder ein ferromagnetisches Gegenstück, sein.

Die Führungsteile 34 definieren eine Aufnahme 48 für die Schiene 17 (auch Führungsschiene genannt). Insbesondere können in den Grundkörpern 42 der Führungsteile 34 je eine Ausnehmung vorgesehen sein, in die die Schiene 17 eingreift.

Die Aufnahme 48 ist dementsprechend vor bzw. auf der Führungsseite des Hauptteils 32 angeordnet. Die Führungselemente 44, insbesondere Rollen und ggf. Gleitelemente, können in die Aufnahme 48 hineinragen und an der Schiene 17 anliegen und als Führung an der Schiene dienen.

In Fig. 4 ist insbesondere die Klemmvorrichtung 30 der Kluppe/Kluppeneinheit 28 dargestellt. Die untere Klemmfläche 37 ist Teil des Grundkörpers 36 und starr ausgeführt. Die obere Klemmfläche 38 ist beweglich und kann von einer geschlossenen Stellung in eine offene Stellung bewegt werden. Hierzu wird die Messerklappe 39 betätigt. Mit den Bezugszeichen 38 und 39 sind die obere Klemmfläche und die Messerklappe bezeichnet, in einer geschlossenen Stellung. Die Bezugszeichen 38' und 39' bezeichnen die obere Klemmfläche und die Messerklappe in einer geöffneten Stellung. Um von der geschlossenen Stellung in die geöffnete Stellung überführt zu werden, muss die Messerklappe 39 den Kluppenöffnungsweg K zurücklegen, bzw. um den Winkel $\alpha$ rotiert werden.

In Fig. 5A ist schematisch eine Öffnereinrichtung 100 für das Öffnen von Kluppen 28, insbesondere von Kluppen einer Reckanlage 10 gezeigt. Die Öffnereinrichtung 100 ist eingerichtet die Kluppen 28 mittels zumindest eines Öffnerelements (hier ein Riemen oder eine Kette mit mehreren Kettensegmenten) zu öffnen, wenn die Kluppen 28 auf der Schiene 17 an der Öffnereinrichtung 100 vorbeigeführt werden. Hierzu werden das Öffnerelement/die Öffnerelemente auf einer Umlaufbahn 130 mittels der Führungselemente 110, 112, 114 geführt. Die Führungselemente können hier Riemenscheiben bzw. Kettenräder sein. Durch die Anordnung der Führungselemente 110, 112, 114 wird hier eine im Wesentlichen dreieckige Umlaufbahn 130 erreicht.

In einem Öffnerabschnitt 135, der von einem Kontaktpunkt 135 und einem Abhebepunkt 136 der Umlaufbahn 130 begrenzt ist, werden die Kluppen 28 durch das Öffnerelement/die Öffnerelemente geöffnet. Wie hier gezeigt ist, ist der Öffnerabschnitt in Bezug auf die Schiene 17 bzw. die Bewegungsrichtung der Kluppen geneigt. Eine Linie, die den Kontaktpunkt 134 mit dem Abhebepunkt 136 verbindet schließt einen Winkel $\beta$ mit einer Bewegungsrichtung der Kluppen ein. Im gezeigten Ausführungsbeispiel ist der Winkel $\beta$ in etwa 8°.

In dem hier gezeigten Beispiel werden die Kluppen 28 in der Auslaufzone 20 mittels der Öffnereinrichtung 100 geöffnet und über die Umlenkung 19 auf der Schiene 17 in die Einlaufzone 18 zurückgeführt um dort erneut die Materialbahn 12 zu greifen.

In Fig. 5B ist schematisch eine Öffnereinrichtung 200 für das Öffnen von Kluppen 28, insbesondere von Kluppen einer Reckanlage 10 gezeigt. Die Öffnereinrichtung 200 ist eingerichtet die Kluppen 28 mittels zumindest eines Öffnerelements zu öffnen, wenn die Kluppen 28 auf der Schiene 17 an der Öffnereinrichtung 100 vorbeigeführt werden. Hierzu werden die Öffnerelemente (hier nicht dargestellt) auf einer Umlaufbahn 230 mittels eines Führungselementes 210, hier eine Kurvenscheibe geführt. Durch die Form der Kurvenscheibe wird hier die Form der Umlaufbahn bestimmt. Wie gezeigt, umfasst die Kurvenscheibe einem im Wesentlichen linearen Bereich, der einen Öffnerabschnitt umfasst. In dem Öffnerabschnitt 235, der von einem Kontaktpunkt 235 und einem Abhebepunkt 236 der Umlaufbahn 230 begrenzt ist, werden die Kluppen 28 durch das Öffnerelement/die Öffnerelemente geöffnet. Wie hier gezeigt ist, ist der Öffnerabschnitt in Bezug auf die Schiene 17 bzw. die Bewegungsrichtung der Kluppen geneigt. Eine Linie, die den Kontaktpunkt 234 mit dem Abhebepunkt 236 verbindet schließt einen Winkel $\beta$ mit einer Bewegungsrichtung der Kluppen ein. Im gezeigten Ausführungsbeispiel ist der Winkel $\beta$ in etwa 6°. Die Kluppen 28 werden in der Auslaufzone 20 mittels der Öffnereinrichtung 100 geöffnet und über die Umlenkung 19 auf der Schiene 17 in die Einlaufzone 18 zurückgeführt um dort erneut die Materialbahn 12 zu greifen.

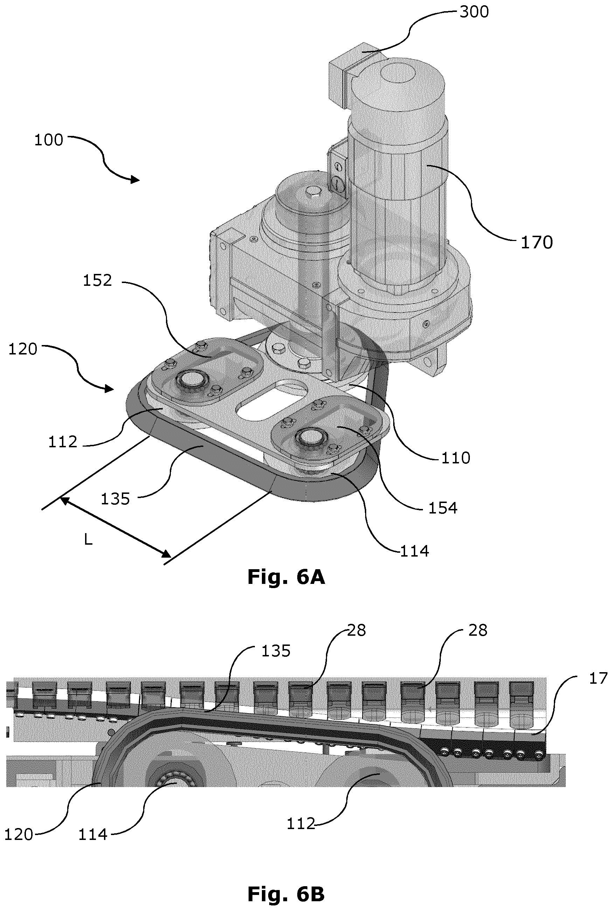

Die Fig. 6A und 6B zeigen eine weitere Öffnereinrichtung 100, wie sie auch schematisch in Fig. 5A gezeigt ist. Hier ist das Öffnerelement 120 als umlaufender Öffnerriemen ausgebildet. Statt eines Öffnerriemens kann auch eine Kette mit einer Vielzahl von Kettensegmenten verwendet werden, wobei die Kettensegmente oder Teile der Kettensegmente entsprechende Öffnerelemente sind.

In Fig. 6A sind drei Führungselemente 110, 112, 114 gezeigt, die als Riemenscheibe oder Kettenrad ausgebildet sein können. Das Führungselement 110 kann mittels eines Antriebs 170 angetrieben werden. Der Antrieb 170 kann über eine Steuereinrichtung 300 gesteuert und/oder geregelt werden. Beispielsweise kann die Antriebsgeschwindigkeit mit einer Kluppen-Fahrgeschwindigkeit synchronisiert werden.

Die Umlaufbahn wird durch die Anzahl, Position und Orientierung der Führungselemente 110, 112, 114 vorgegeben. In Fig. 6A hat die Umlaufbahn eine im Wesentlichen dreieckige Form. Um die Position und/oder Orientierung des Öffnerabschnitts 135 einzustellen bzw. zu verändern, sind Positioniereinheiten 152, 154 vorgesehen. Diese erlauben die Position der Führungselemente 112 und 114 in TD-Richtung oder MD-Richtung zu verstellen. Die hier gezeigten Positioniereinheiten ermöglichen ein manuelles Verstellen. Ebenso können Positionierantriebe vorgesehen sein, die ein automatisiertes Verstellen ermöglichen.

Wie in Fig. 6B gezeigt ist, kann das Öffnerelement/die Öffnerelemente (Riemen oder Kette aus einer Vielzahl von Kettensegmenten) mittels der Führungselemente 112, 114 (Riemenscheibe bzw. Kettenrad) auf einer Umlaufbahn geführt werden, um mit der/den zu öffnenden Kluppen 28 in Kontakt zu kommen und diese im Öffnerabschnitt 135 der Umlaufbahn 130 zu öffnen. Hierzu kommt die Kluppe 28 mit dem Riemen oder einem Kettensegment am Kontaktpunkt in Kontakt. Der Öffnerabschnitt der Umlaufbahn ist so positioniert und orientiert, dass der Riemen (d.h. das Öffnerelement) die Kluppe öffnet (z.B. durch Betätigen der Messerklappe). Am Abhebepunkt löst sich der Kontakt wieder. Die Länge L des Öffnerabschnitts 135 kann so gewählt sein, dass zeitgleich mehrere Kluppen 28 mit dem Riemen in Kontakt sind. In dem in Fig. 6B gezeigten Beispiel sind sechs Kluppen 28 im Öffnerabschnitt mit dem Öffnerelement 120 in Kontakt.

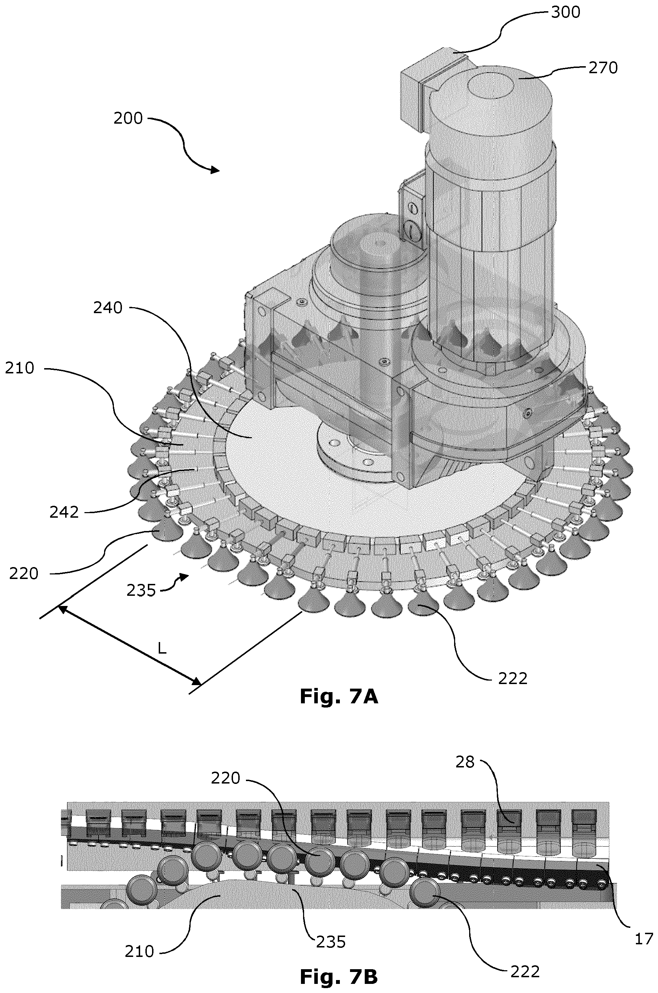

Die Fig. 7A und 7B zeigen eine weitere Öffnereinrichtung 200, wie sie auch schematisch in Fig. 5B gezeigt ist. Das Führungselement 210 umfasst hier eine Kurvenscheibe, wobei die Form der Kurvenscheibe die Umlaufbahn bestimmt. Im hier gezeigten Beispiel ist die Kurvenscheibe nur bereichsweise rund und weist einen abgeflachten und mithin im Wesentlichen linearen Abschnitt auf, der den Öffnerabschnitt 235 umfasst. Es versteht sich, dass die hier gezeigte Form der Kurvenscheibe nur exemplarisch ist und durch die Wahl der Form der Kurvenscheibe die Form der Umlaufbahn nahezu beliebig gestaltet werden kann.

Die Kurvenscheibe (Führungselement 210) führt eine Vielzahl von Öffnerelementen 220, 222 auf der Umlaufbahn. Diese Öffnerelemente sind hier als Öffnerrollen ausgeführt. Die Öffnerrollen haben einen konturierten Querschnitt, der an die Form der Kluppen 28 angepasst ist. Die als Öffnerrollen ausgeführten Öffnerelemente 220, 222 erlauben es eine verbleibende Relativbewegung zwischen den zu öffnenden Kluppen 28 und den durch das Führungselement 210 (hier umfassend die Kurvenscheibe) geführten Öffnerelementen 220, 222 durch eine Eigenrotation auszugleichen. Somit kann der Verschleiß weiter reduziert werden. Hierzu sind die Öffnerrollen drehbar gelagert.

Die Öffnerelemente 220, 222 werden entlang der Kurvenscheibe, d.h. auf der Umlaufbahn, geführt, sodass die Öffnerelemente 220, 222 mit der/den zu öffnenden Kluppen 28 in Kontakt kommen (s. Fig. 7B) und diese im Öffnerabschnitt 235 der Umlaufbahn öffnen. Hierzu kommt die Kluppe 28 mit einem entsprechenden Öffnerelement 220 am Kontaktpunkt in Kontakt. Der Öffnerabschnitt 235 der Umlaufbahn ist so positioniert und orientiert, dass das Öffnerelement 220 die Kluppe 28 öffnet (z.B. durch Betätigen der Messerklappe). Am Abhebepunkt löst sich der Kontakt wieder. Die Länge L des Öffnerabschnitts 235 ist hier so gewählt, dass zeitgleich mehrere (hier vier) Öffnerelemente 220, 222 im Öffnerabschnitt geführt werden und so mehrere Kluppen 28 geöffnet werden könne (in Serie). Die Größe (insbesondere der Durchmesser der Öffnerrollen) der einzelnen Öffnerelemente ist im gezeigten Ausführungsbeispiel so bemessen, dass ein Öffnerelement einer Kluppe zugeordnet ist.

Wie in Fig. 7A gezeigt ist, können die Öffnerelemente 220, 222 federnd gelagert sein. Diese federnde Lagerung kann beispielsweise über Federelemente 242, insbesondere Stößelelemente, erfolgen. Die Federelemente/Stößelelemente sind an einem ersten Ende an einer Antriebsscheibe 240 der Öffnereinrichtung angeordnet und erstrecken sich von dieser Antriebsscheibe 240 im Wesentlichen radial nach außen. An einem gegenüberliegenden zweiten Ende sind die Federelemente/Stö-ßelelemente mit je einem Öffnerelement 220, 222 verbunden. Mit anderen Worten verbinden die Federelemente/Stößelelemente 242 die Öffnerelemente 220, 222 mit der Antriebsscheibe 240. Die Antriebsscheibe kann über einen Antrieb 270 angetrieben werden. Dieser Antrieb kann mittels einer Steuereinrichtung 300 gesteuert und/oder geregelt werden. Insbesondere kann die Antriebsgeschwindigkeit mit einer Kluppen-Fahrgeschwindigkeit synchronisiert werden.

Über die Antriebsscheibe 240 werden die Öffnerelemente 220, 222 auf der Umlaufbahn angetrieben und über die Kurvenscheibe und die Federelemente auf der Umlaufbahn geführt.

Die vorliegende Erfindung kann natürlich auch auf andere Weise als die hierin dargelegten ausgeführt werden, ohne dass dadurch wesentliche Merkmale der Erfindung beeinträchtigt werden. Die vorliegenden Ausführungsformen sind in jeder Hinsicht als beispielhaft und nicht einschränkend zu betrachten, und alle Änderungen, die in den Bedeutungs- und Äquivalenzbereich der beigefügten Ansprüche fallen, sollen darin eingeschlossen sein.

**Bezugszeichenliste**

| | |
|---|---|
| 10 | Reckanlage |
| 12 | Materialbahn |
| 14 | Ofen |
| 16 | Antriebssystem |
| 17 | Schiene |
| 18 | Einlaufzone |
| 19 | Umlenkung |
| 20 | Auslaufzone |
| 22 | erste Zone (Vorheizzone) |
| 24 | zweite Zone (Reckzone) |
| 26 | dritte Zone (Wärmebehandlungszone) |
| 28 | Kluppeneinheit |
| 30 | Klemmvorrichtung |
| 32 | Hauptteil |
| 34 | Führungsteil |
| 36 | Grundkörper |
| 37 | untere Klemmfläche |
| 38 | obere Klemmfläche |
| 39 | Messerklappe |
| 40 | Befestigungsabschnitt |

| | |
|---|---|
| 42 | Grundkörper |
| 44 | Führungselement |
| 46 | Antriebselement |
| 48 | Aufnahme |
| 100 | Öffnereinrichtung |
| 110 | Führungselement |
| 112 | Führungselement |
| 114 | Führungselement |
| 120 | Öffnerelement |
| 130 | Umlaufbahn |
| 134 | Kontaktpunkt |
| 135 | Öffnerabschnitt |
| 136 | Abhebepunkt |
| 152 | Positioniereinheit |
| 154 | Positioniereinheit |
| 170 | Antrieb |
| 200 | Öffnereinrichtung |
| 210 | Führungselement |
| 220 | Öffnerelement |
| 222 | Öffnerelement |
| 230 | Umlaufbahn |
| 234 | Kontaktpunkt |
| 235 | Öffnerabschnitt |
| 236 | Abhebepunkt |
| 240 | Antriebsscheibe |
| 242 | Federelement |
| 270 | Antrieb |
| 300 | Steuereinrichtung |

| | |
|---|---|
| A | Breite der Materialbahn am Ende der Reckzone |
| E | Breite der Materialbahn in der Einlaufzone |
| M | Materialbahnebene |
| P | Primärrichtung der Zugrichtung |
| R | Abzugsrichtung (MD-Richtung) |
| r | Abstand |
| S | Symmetrieachse |
| K | Kluppenöffnungsweg |
| L | Länge d. Öffnerabschnitts |
| MD | MD-Richtung |
| TD | TD-Richtung |
| Z | Vertikale Richtung |

| | |
|---|---|
| α | Winkelbereich |
| β | Winkel |

**Patentansprüche**

1. Öffnereinrichtung (100, 200) für das Öffnen von Kluppen (28), insbesondere von Kluppen einer Reckanlage (10), die Öffnereinrichtung (100, 200) umfassend

   zumindest ein Führungselement (110, 112, 114; 210) und zumindest ein Öffnerelement (120; 220, 222), wobei
   das Öffnerelement (120; 220, 222) auf einer Umlaufbahn (130, 230) beweglich angeordnet ist, wobei

das Führungselement (110, 112, 114; 210) das Öffnerelement (120; 220, 222) auf zumindest einem Teil der Umlaufbahn (130, 230) führt, wobei

die Umlaufbahn (130, 230) einen Öffnerabschnitt (135, 235) umfasst, der sich von einem Kontaktpunkt (134; 234) zu einem Abhebepunkt (136; 236) erstreckt, wobei

der Kontaktpunkt (134; 234) ein Punkt ist, an dem eine zu öffnende Kluppe (28) mit dem Öffnerelement (120; 220, 222) in Kontakt kommt und der Abhebepunkt (136; 236) ein Punkt ist, bei dem der Kontakt zwischen der geöffneten Kluppe (28) und dem Öffnerelement wieder gelöst wird, und wobei

das Öffnerelement (120; 220, 222) dazu eingerichtet ist die zu öffnende Kluppen (28) im Öffnerabschnitt (135, 235) zu öffnen.

2. Öffnereinrichtung (100, 200) nach Anspruch 1, wobei die Kluppen (28) einen Kluppenöffnungsweg (K) aufweisen, wobei

der Kluppenöffnungsweg (K) ein Weg ist, den eine Messerklappe (39) der Kluppe (28) bewegt werden muss, um die Kluppe von einem geschlossenen Zustand in einen geöffneten Zustand zu überführen, und wobei

der Öffnerabschnitt (135, 235) eine Länge (L) aufweist, die zumindest die 1,5 fache Länge des Kluppenöffnungswegs, insbesondere zumindest die 2 fache Länge des Kluppenöffnungswegs, zumindest die 4 fache Länge des Kluppenöffnungswegs, zumindest die 5 fache Länge des Kluppenöffnungswegs, oder zumindest die 6 fache Länge des Kluppenöffnungswegs

3. Öffnereinrichtung (100, 200) nach Anspruch 1 oder 2, wobei die Umlaufbahn (130, 230) von einer Kreisform abweicht, und/oder einen zumindest im Wesentlichen linearen Abschnitt umfasst, der den Öffnerabschnitt (135, 235) umfasst oder bildet.

4. Öffnereinrichtung (100, 200) nach einem der Ansprüche 1 bis 3, wobei eine Linie, die den Kontaktpunkt (134; 234) mit dem Abhebepunkt (136; 236) der Umlaufbahn (130, 230) verbindet einen Winkel (β) mit einer Bewegungsrichtung der Kluppen einschließt, der im Bereich von 0° bis 20°, insbesondere im Bereich von 3° bis 15°, oder im Bereich von 4° bis 8° liegt.

5. Öffnereinrichtung (100, 200) nach einem der Ansprüche 1 bis 4, wobei der Abhebepunkt (136; 236) der Umlaufbahn (130, 230) weiter von einer Materialbahnebene (M) einer von den Kluppen (28) gehaltenen Materialbahn entfernt liegt, als der Kontaktpunkt (135; 235) der Umlaufbahn (130, 230).

6. Öffnereinrichtung (100, 200) nach einem der Ansprüche 1 bis 6, wobei die Öffnereinrichtung (100, 200) einen Antrieb (170) umfasst, und wobei der Antrieb (170) dazu eingerichtet ist mit einer Kluppen-Fahrgeschwindigkeit synchronisiert zu werden, derart, dass das zumindest ein Öffnerelement (120; 220, 222) gegenüber einer zu öffnenden Kluppe (28) einen Schlupf im Bereich von -10% bis +10%, vorzugsweise im Bereich von -5% bis +5% und insbesondere im Bereich von 0% bis +3% aufweist.

7. Öffnereinrichtung (100, 200) nach einem der Ansprüche 1 bis 6, wobei die Position und/oder Orientierung des Öffnerabschnitts (135, 235) verstellbar ist, wobei

die Öffnereinrichtung (100, 200) vorzugsweise zumindest einen Positionierantrieb (166, 167) umfasst, zum Verstellen der Position und/oder Orientierung des Öffnerabschnitts (135, 235).

8. Öffnereinrichtung (100, 200) nach einem der Ansprüche 1 bis 7, wobei die Öffnereinrichtung (100, 200) weiterhin eine Steuereinrichtung (300) umfasst, die die Position und/oder Orientierung des Öffnerabschnitts (135, 235) und/oder eine Antriebsgeschwindigkeit des Antriebs (170) der Öffnereinrichtung (100, 200) verändern, insbesondere regeln kann.

9. Öffnereinrichtung (100, 200) nach einem der Ansprüche 1 bis 8, wobei das zumindest eine Öffnerelement einen konturierten Querschnitt aufweist, wobei der konturierte Querschnitt an einen Kontaktbereich einer Messerklappe (39) einer teils zu öffnenden Kluppe (28) angepasst ist.

10. Öffnereinrichtung (100, 200) nach einem der Ansprüche 1 bis 9, wobei das Öffnerelement ein Öffnerriemen ist, und wobei das zumindest ein Führungselement eine Riemenscheibe umfasst.

11. Öffnereinrichtung (100, 200) nach einem der Ansprüche 1 bis 9, wobei das zumindest eine Öffnerelement ein Kettensegment oder ein Teil eines Kettensegments ist, und wobei das zumindest eine Führungselement ein Kettenrad umfasst.

12. Öffnereinrichtung (100, 200) nach einem der Ansprüche 1 bis 9, wobei das Führungselement eine Kurvenscheibe umfasst, wobei

die Form der Kurvenscheibe die Umlaufbahn bestimmt, und wobei
die Kurvenscheibe eine Vielzahl von Öffnerelementen, auf der Umlaufbahn führt, wobei die Vielzahl von Öffnerelementen insbesondere Öffnerrollen sind.

**13.** Öffnereinrichtung (100, 200) nach einem der Ansprüche 11 oder 12, wobei die Öffnerelemente (120; 220, 222) federnd gelagert sind, insbesondere in einer Kluppen-Aktuierungsrichtung.

**14.** Reckanlage (10), insbesondere Quer-, Längs- und/oder Simultan-Reckanlage, umfassend

eine Vielzahl von Kluppen (28) zum Greifen einer zu reckenden Materialbahn (28), insbesondere Folie, und
zumindest eine Öffnereinrichtung (100, 200) (100) nach einem der Ansprüche 1 bis 13.

**15.** Reckanlage (10) nach Anspruch 14, insbesondere Folienreckanlage, wobei die Reckanlage (10) eine Kluppen-Fahrgeschwindigkeit von größer 400 m/min, vorzugsweise größer 450 m/min und insbesondere bevorzugt größer 500 m/min, und insbesondere bevorzugt größer 600m/min aufweist.

**Fig. 1**

**Fig. 2**

**Fig. 3**

**Fig. 4**

EP 4 491 374 A1

**Fig. 5A**

**Fig. 5B**

15

**Fig. 6A**

**Fig. 6B**

**Fig. 7A**

**Fig. 7B**

Europäisches
Patentamt

European
Patent Office

Office européen
des brevets

# EUROPÄISCHER RECHERCHENBERICHT

**Nummer der Anmeldung**

EP 24 18 7299

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 26 29 890 C2 (DU PONT) 14. November 1985 (1985-11-14) * Abbildungen 1,2 * ----- | 1-15 | INV. B29C55/20 |
| A | EP 3 437 832 A1 (BRUECKNER MASCHB GMBH & CO KG [DE]) 6. Februar 2019 (2019-02-06) * das ganze Dokument * ----- | 1-15 | ADD. B29C55/02 |

**RECHERCHIERTE SACHGEBIETE (IPC)**

B29C

Der vorliegende Recherchenbericht wurde für alle Patentansprüche erstellt

| Recherchenort | Abschlußdatum der Recherche | Prüfer |
|---|---|---|
| München | 4. November 2024 | Schneider, Dominik |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 7299

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2024

| Im Recherchenbericht angeführtes Patentdokument | | Datum der Veröffentlichung | Mitglied(er) der Patentfamilie | | Datum der Veröffentlichung |
|---|---|---|---|---|---|
| DE 2629890 | C2 | 14-11-1985 | DE | 2629890 A1 | 20-01-1977 |
| | | | FR | 2316368 A1 | 28-01-1977 |
| | | | GB | 1533314 A | 22-11-1978 |
| | | | JP | S526872 A | 19-01-1977 |
| | | | JP | S606739 U | 18-01-1985 |
| | | | JP | S613868 Y2 | 06-02-1986 |
| | | | NL | 7607327 A | 05-01-1977 |
| | | | US | 4065838 A | 03-01-1978 |
| EP 3437832 | A1 | 06-02-2019 | CN | 109318469 A | 12-02-2019 |
| | | | DE | 102017117420 A1 | 07-02-2019 |
| | | | EP | 3437832 A1 | 06-02-2019 |
| | | | ES | 2749581 T3 | 23-03-2020 |
| | | | HU | E046895 T2 | 28-04-2020 |
| | | | JP | 6713510 B2 | 24-06-2020 |
| | | | JP | 2019025916 A | 21-02-2019 |
| | | | KR | 20190013667 A | 11-02-2019 |
| | | | PL | 3437832 T3 | 31-12-2019 |
| | | | PT | 3437832 T | 25-10-2019 |
| | | | TW | 201910102 A | 16-03-2019 |
| | | | US | 2019039282 A1 | 07-02-2019 |

EPO FORM P0461

Für nähere Einzelheiten zu diesem Anhang : siehe Amtsblatt des Europäischen Patentamts, Nr.12/82